# DEMANDE DE BREVET EUROPEEN

(11) **EP 1 602 514 A1**
(43) Date de publication de la demande: **07.12.2005**
(21) Numéro de dépôt: 05300433.9
(22) Date de dépôt: 31.05.2005
(51) Int. Cl.: B60H 1/00

(54) **Commande de controle de l'ambiance thermique d'un habitacle de vehicule automobile**

(30) Priorité: 04.06.2004 FR 0406074
(71) Demandeur: Renault s.a.s., 92100 Boulogne Billancourt (FR)
(72) Inventeur: Fabregat-Andreu, Paula, 75009 Paris (FR)

(57) **Abrégé**

Commande de contrôle de l'ambiance thermique d'un habitacle de véhicule automobile, comprenant au moins une commande (11), caractérisé en ce que la commande forme une partie périphérique (10) comprenant au moins une commande (11) et une partie centrale (20) formant une sortie d'air (21).

## Description

L'invention concerne une commande de contrôle de l'ambiance thermique d'un habitacle de véhicule automobile, et plus particulièrement une commande de contrôle intégrant une buse de ventilation.

Tel que décrit dans la publication FR-A-2822416, des commandes de climatisation déportées sont utilisées afin de regrouper, à portée de la main du conducteur ou des passagers, les informations utiles au contrôle de l'ambiance thermique de l'habitacle d'un véhicule, tels que par exemple la température, la puissance du flux et l'utilisation de l'air conditionné.

Ce type de commande peut-être localisé à proximité d'une buse d'aération. L'ensemble buse d'aération et commande couvrant une surface pouvant poser des problème d'intégration en particulier lorsque cet ensemble est localisé à proximité du montant de baie ou de la porte d'accès au véhicule.

Afin de pallier ces inconvénients, l'invention a pour objet une commande de contrôle de l'ambiance thermique d'un habitacle de véhicule automobile intégrant une buse de ventilation.

L'invention à également pour objet une commande de contrôle compacte et économique.

L'invention à également pour objet une commande de contrôle et une buse ayant des moyens communs de fixation sur le véhicule.

Selon une caractéristique de l'invention, la commande forme une partie périphérique comprenant au moins une commande et une partie centrale formant une sortie d'air.

Selon une autre caractéristique de l'invention, la partie périphérique comporte un moyen d'information.

Selon une autre caractéristique de l'invention, la partie centrale forme une buse qui comporte une commande d'orientation du flux d'air.

Selon une autre caractéristique de l'invention, la commande d'orientation contrôle le débit de l'air à la sortie de la buse.

Selon une autre caractéristique de l'invention, la partie périphérique et la partie centrale forment un module porté par un conduit de ventilation.

Selon une autre caractéristique de l'invention, l'ensemble des éléments de la partie périphérique comportent un bord qui forme un bord de la buse.

D'autres caractéristiques et avantages de l'invention apparaîtront à la lecture de la description d'exemples de réalisation d'une commande de contrôle de l'ambiance thermique d'un habitacle de véhicule automobile au dessin annexé dans lequel :

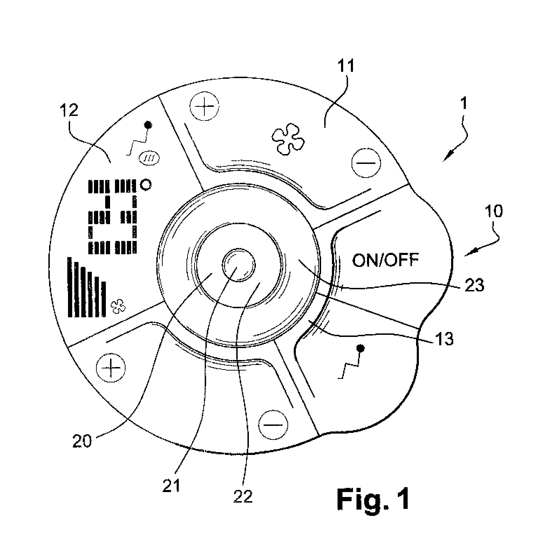

- La figure 1 représente une vue d'une commande selon l'invention.

La commande peut être localisé à n'importe quel endroit de l'habitacle du véhicule accessible par un passager. La présence de certaines fonctions de commandes générales étant habituellement réservée au conducteur.

La commande de contrôle de l'ambiance thermique d'un habitacle de véhicule automobile, telle que représenté, peut comporter plus ou moins de fonctions, l'ordre de ces fonctions pouvant être modifié sans changer le but et les avantages de l'invention.

La commande 1 comporte une partie périphérique 10 et une partie centrale 20. La partie périphérique 10 comporte un ensemble de commandes 11 et/ou de moyens d'information 12. Les commandes 11 peuvent être, à titre non limitatif, des boutons de réglage de la température de l'air sortant au moins de la partie centrale 20, de la puissance du flux d'air, de la mise en route de l'air conditionné.

Le moyen d'information 12 peut être, tel que représenté, un écran d'affichage présentant, à titre non limitatif, la température de l'air sortant au moins de la partie centrale 20, le niveau de puissance du flux d'air, les sorties d'air actives. Le moyen d'information 12 peut être intéractif et changer de mode d'information par exemple par une action sur un bouton de commande 11 dédié à cette fonction. Le changement de mode d'information permet de changer le mode d'affichage, par exemple en affichant uniquement la température en gros caractères, ou de modifier le type d'informations, par exemple en affichant la température extérieure du véhicule ou une station radio.

La partie centrale 20 forme une buse d'aération 21 reliée à un conduit de ventilation (non représenté). La buse 21 comporte une commande d'orientation 22 du flux d'air. La commande d'orientation 22 peut avoir comme fonction complémentaire de fermeture et d'ouverture de la buse 21, et le contrôle du débit d'air en lieu et place d'un bouton de commande 11 dédié à cette fonction.

Selon un premier mode de réalisation représenté à la figure 1 les boutons de commandes 11 sont réparties autour de la partie centrale 20, formant une buse 21 d'aération. La buse 21 comporte un bord 23 qui forme une continuité avec les bords 13 des boutons de commande 11 afin de limiter les risques de blessure des passagers en cas d'accident. Dans une variante de réalisation les bords 13 des boutons 11 peuvent se prolonger dans la partie centrale 20 afin de former le bord 23 de la buse 21. Afin de former un bord 23 continu l'ensemble des éléments formant la partie centrale 20 comporte un bord 13 formant le bord 23.

L'ensemble de la partie périphérique 10 et de la partie centrale 20 forme un module qui se monte directement sur le conduit de ventilation. Un tel montage permettant d'éviter l'utilisation de fixations spécifiques pour l'une ou l'autre des parties.

Dans un second mode de réalisation, non représenté, la partie périphérique est fixée sur support, par exemple une garniture de porte, et reçoit dans la partie centrale 20 l'extrémité du conduit de ventilation qui forme la buse 21. La commande d'orientation 22 étant alors fixée dans le conduit de ventilation.

## Revendications

1. Commande de contrôle de l'ambiance thermique d'un habitacle de véhicule automobile, comprenant au moins une commande (11), **caractérisé en ce que** la commande forme une partie périphérique (10) comprenant au moins une commande (11) et une partie centrale (20) formant une buse (21) qui comporte une commande d'orientation (22) du flux d'air.

2. Commande de contrôle de l'ambiance thermique selon la revendication 1, **caractérisé en ce que** la partie périphérique (10) comporte un moyen d'information (12).

3. Commande de contrôle de l'ambiance thermique selon l'une des revendications 1 ou 2, **caractérisé en ce que** la commande d'orientation (22) contrôle le débit de l'air à la sortie de la buse (21).

4. Commande de contrôle de l'ambiance thermique selon l'une quelconque des revendications précédentes, **caractérisé en ce que** la partie périphérique (10) et la partie centrale (20) forment un module porté par un conduit de ventilation.

5. Commande de contrôle de l'ambiance thermique selon l'une quelconque des revendications précédentes, **caractérisé en ce que** l'ensemble des éléments de la partie périphérique (10) comportent un bord (13) qui forme un bord (23) de la buse (21).
